Europäisches Patentamt

European Patent Office

Office européen des brevets

(19)

(11) Publication number: **0 253 897**
**A1**

(12)

# EUROPEAN PATENT APPLICATION
published in accordance with Art. 158(3) EPC

(21) Application number: 87900696.3

(22) Date of filing: 12.01.87

Data of the international application taken as a basis:

(86) International application number:
PCT/JP87/00019

(87) International publication number:
WO87/04270 (16.07.87 87/15)

(51) Int. Cl.³: **G 03 B 27/72**

(30) Priority: 14.01.86 JP 4228/86
27.12.86 JP 311752/86

(43) Date of publication of application:
27.01.88 Bulletin 88/4

(84) Designated Contracting States:
BE DE FR GB

(71) Applicant: POLAROID CORPORATION
549 Technology Square
Cambridge, Massachusetts 02139(US)

(72) Inventor: ISHIKAWA, Masahiro
13-23, Akashicho
Hiratsuka-shi Kanagawa 254(JP)

(72) Inventor: YANAGAWA, Nobuyuki
4-15-60, Nakakaigan
Chigasaki-shi Kanagawa 253(JP)

(72) Inventor: ICHIMURA, Hajime
Purinsu Vira 2013-28-19, Minamisenzoku
Ota-ku Tokyo 145(JP)

(74) Representative: Skone James, Robert Edmund et al,
GILL JENNINGS & EVERY 53-64 Chancery Lane
London WC2A 1HN(GB)

(54) APPARATUS FOR FORMING IMAGE.

(57) An apparatus for forming an image, comprising a glass (5) for placing an original, a flash lamp (22) for illuminating the original placed thereon, and an optical system which permits the light reflected by the original illuminated by the flash lamp to be focused on a photosensitive material placed at a predetermined position. When the amount of light emitted only once by the flash lamp is not sufficient for the photosensitive material, the light is emitted a plurality of times by the flash lamp so that the photosensitive material is adequately exposed.

EP 0 253 897 A1

SPECIFICATION


IMAGE FORMING APPARATUS


TECHNICAL FIELD

The present invention relates to an image forming apparatus for forming an image of an original on a diapositive for projection.


BACKGROUND ART

In various lecture meetings, scientific publication assemblies and others, charts, photographs and the like are projected as enlarged onto a screen by using a slide projector and an overhead projector as a means for aiding explanation.

For preparation of a slide from an original, it has heretofore been a common practice that a 35-mm camera 61 is fixedly mounted on a supporting column 62 of a two-piece stand 60 in a disposition facing downwardly, as is shown in Fig. 2, wherein an original 64 disposed on a table plate 65 of the two-piece stand with the surface carrying an image facing upwardly is illuminated with a light source 63 such as a projection lamp or stroboscopic flash lamp and the image is taken by operating a shutter of the camera 61. In that case, operator has to adjust the height of the camera 61 mounted on the supporting column 62 in dependence on the size of the original 64, adjust the focus and determine the shutter speed, aperture value in consideration of the type of the original, the type of the light source and brightness. This procedure requires skillfulness, and it has been difficult to obtain a slide which can be used satisfactorily unless the operator is accustomed to handle the camera.

On the other hand, a diapositive for projection by an overhead projector has heretofore been prepared by coping an original image onto a transparent sheet by using an electro-photographic copying machine. With this procedure, however, only the image in black and white can be obtained. In recent years, color image enjoys higher popularity in the CRT display for a computer or the like, not to speak of television and photograph. The projected image in black and white is poor in impression.

Recently, a variety of instant slide films have been proposed which allow color slides to be prepared immediately after photographing by simplifying the development process. A color instant film pack suited for the application mentioned above is commercially available which allows a color diapositive for the overhead projector to be prepared in a simplified manner. However, for using this film pack, an expensive camera destined for use only with this film pack is necessary. Besides, troublesome procedure is required as in the case of the aforementioned photographing procedure for the preparation of slide by copying the original.

In view of the shortcomings of the hitherto known method of preparing the 35-mm slide and the color diapositive for the overhead projector by copying the original as described above, the inventor of the present application has devised an image forming apparatus which is simple in manipulation as in the case of the copying machine and in which the 35-mm slide film as well as the diapositive for the overhead projector using the instant film pack can be easily prepared from the original.

In this image forming apparatus, a contact glass plate for supporting thereon an original is provided on a top plate of the main body of the apparatus, wherein light reflected from the original illuminated by an original illuminating light source over the whole surface thereof is focused through a focusing optical system having two exchangeable optical paths onto a 35-mm roll film or a film in a film pack loaded in a 35-mm film loading section and an instant film pack holder, respectively, which are

- 3 -

provided in a casing of the main body of the apparatus to thereby effectuate exposure to light.

Now, the quantity of light to which the aforementioned film is exposed is determined in dependence on ASA (ISO) sensitivity of the film. For ensuring the appropriate exposure, the quantity of light emitted by the flash lamp is determined in accordance with the effective aperture of the optical system for exposure and the contraction ratio for projecting the original image onto the aforementioned film. When the sensitivity of the film being used is every low or when the light transmissivity of the lens used is low or when the quantity of light emitted by the flash lamp is decreased in the course of time lapse, it may occur that the quantity of light emitted by the flash lamp is insufficient for ensuring the proper exposure.

In view of the state of the art described above, it is an object of the present invention to provide an image forming apparatus equipped with an exposure device which is capable of illuminating a film with an appropriate quantity of light for exposure even when the sensitivity of a film being used is low or when the lens is of low light transmissivity or when the quantity of light is reduced in the course of time lapse.

DISCLOSURE OF THE INVENTION

For accomplishing the above object, the present invention provides an image forming apparatus including a glass plate on which an original is disposed, a flash lamp for illuminating the original disposed on said glass plate, and an illuminating optical system for focusing light reflected from the original illuminated with the aforementioned flash lamp onto a light sensitive material mounted on the apparatus at a predetermined position for exposure thereof, characterized in that when the quantity of light emitted by the aforementioned flash lamp through a single firing thereof is insufficient for an appropriate exposure of the aforementioned light sensitive material, the flash lamp is fired a plurality of times for assuring the appropriate exposure.

BRIEF EXPLANATION OF THE DRAWINGS

Fig. 1 is a perspective view showing an outer appearance of an embodiment of the present invention, Fig. 2 is a perspective view showing a hitherto known apparatus for preparing diapositive for projection, Figs. 3 and 4 are sectional views of the embodiment shown in Fig. 1 taken from the front side and a lateral side, respectively, Fig. 5 is a front view showing an example of the apparatus

- 5 -

for changing over focusing lenses in dependence on the sizes of the originals, Fig. 6 is a sectional view showing, by way of example, a structure of the automatic exposure apparatus according to the present invention, Figs. 7(a) and (b) are sectional views of embodiments in which position of the standard reflection plate is varied, Fig. 8 is a sectional view of an embodiment in which the position of sensor is changed, and Fig. 9 is a graphical view for illustrating a method of controlling the quantity of light emitted by a flash lamp, Fig. 10 is a sectional view showing a structure of the automatic exposure apparatus according to another embodiment of the present invention.

BEST MODES FOR CARRYING OUT THE INVENTION

In the following, an exemplary embodiment of the present invention will be described in detail by referring to the drawings.

Fig. 1 is a perspective view showing an outer appearance of the image forming apparatus according to an exemplary embodiment of the present invention, and Figs. 3 and 4 are sectional views of the same as viewed from the front and the left side, respectively.

A main body 100 of the apparatus is formed as an obscura box in which a contact glass plate 5 for supporting an original disposed thereon is provided on a top plate of the casing of the obscura, while an original pressing plate 1 for holding down the original disposed on the contact glass plate is pivotally mounted on a casing ceiling plate at the rear end of the original pressing plate 1.

A manipulation portion 2 is provided in front of the contact

glass plate 5. A 35-mm film loading portion 3 is provided

in a front wall of the casing 101, while a holder 4 for an instant film pack is removably installed on the top plate of the casing 101 at the right side to the contact glass plate 5.

The original disposed on the contact glass plate 5 is illuminated over the whole surface by means of two flash lamps 22 provided on the front side and rear side below the contact glass plate 5, as is shown in Fig. 4.

For assuring uniform illumination over the original surface, the flash lamp 22 is provided with a reflector plate 23 and a collecting and diffusing filter (stepped concave or convex lens such as a Fresnel lens) 24.

Disposed between the contact glass plate 5 on one hand and a 35-mm film and a film within a film pack on the other hand is a focusing optical system having exchangeable optical paths for focusing reflected light from the original illuminated by the flash lamps 22 selectively onto either the 35-mm film loaded in the aforementioned 35-mm film loading portion or the film within the film pack loaded in the instant film pack holder 4. Referring to Fig. 3, this optical system includes a first mirror 9 which is swingable at the upper end thereof about a supporting stud 8 between a position shown in a solid line and a position shown in a broken line, a second mirror 25 disposed in the optical path of the light reflected from the original when the first mirror 9 is located at the solid line position, lenses 11-1 and 11-2 disposed in the optical path (shown in Fig. 4) for the light reflected by the second mirror 25 for focusing the image on a surface of the 35-mm film, and lenses 10-1 and 10-2 and a third mirror 26 disposed in the optical path for the reflection light shown in a broken line in Fig. 3 for focusing the image onto the film within the film pack when the first mirror 9 is at the position indicated by the broken line.

In the apparatus according to this embodiment, there can be used two types of originals having sizes of 8.5" x 11" (215.9 mm x 279.4 mm) and 5" x 7" (127 mm x 177.8 mm) (approximating to a B6 size, a 4 x 6 size and a cabinet size in a 2L-size color print). For focusing the image of the original fully over the 35-mm film and the film of the instant film pack, respectively, there are provided so as to be exchangeably inserted in the respective

- 8 -

optical paths the two pairs of lenses 10-1, 10-2 and 11-1, 11-2 having respective focal lengths differing from each other in the two optical paths.

Referring to Fig. 5 which is a view showing an example of a lens changing-over apparatus, the lenses 10-1, 10-2 and 11-1, 11-2 are mounted on turrets 12 and 13 having a sector-like shape and rotatable about shafts 12' or 13', respectively, wherein each turret has a worm gear formed in an arcuate portion and meshing with a worm rotated by a motor 27. Thus, by rotating the motor 27 in either one of the directions, either the lenses 10-1, 10-2 or 11-1, 11-2 are selectively inserted in the optical path. For indexing the angular position of the turrets 12, 13, a stopper (not shown) is provided adjustably in respect to the position. Further, each lens is so mounted on the associated turret as to be finely adjustable in the direction coinciding with the optical path and thus can be adjusted to focus the image on the film with accuracy.

The turrets 12, 13 are moved slidably in contact with light shield members 28, 29 for protecting the film from exposure to light. Further, shutters 30 and 31 are installed, respectively, in the optical paths on the side of the turrets facing the films. The shutter 30, 31 is so controlled that upon actuation of a start switch provided in the manipulating portion 2, the flash lamps 22 are fired
after the shutter has been opened completely, the shutter
beginning to be closed upon completion of the flashing,
as in the case of operation of the shutter at the time of
flashing of the strobo lamp in the photographic camera.

Next, an exemplary embodiment of the automatic
exposure apparatus according to the present invention will
be described by referring to Fig. 6. Provided outside of
an image region A of the original supporting surface of
the contact glass plate 5 is a standard reflection plate
45 which is bonded to the lower surface of the contact
glass plate 5 in the case of the illustrated embodiment.
The standard reflection plate 45 has a reflection ratio
substantially equal to that of the blank portion of a
standard original. Disposed in opposition to the standard
reflection plate 45 is a sensor 46 for making it possible
to detect the quantity of light reflected by the standard
reflection plate 45 upon illumination by the flash lamp 22.
On the basis of the sensor output corresponding to the
quantity of light detected by the sensor 46, the quantity of
light emitted by the flash lamp is so controlled that the
quantity of light on the original surface assumes a value
set previously in dependence on the film sensitivity, the
effective lens aperture and the contraction ratio for projection.

- 10 -

The means for controlling the quantity of light emission may be implemented in such a manner that the light quantity required for the contraction ratio and the effective lens aperture is stored in a controller for each of the film sensitivities, wherein light emission by the flash lamp 22 is stopped when the quantity of light detected by the sensor 46 has attained the aforementioned requisite quantity of light.

Fig. 9 shows graphically a relationship between the quantity of light and time duration of the flash lamp controlled in the manner mentioned above.

In Fig. 9, a curve (1) represents light emission of a flash lamp, and a curve (2) represents operation of a shutter, from which it will be seen that the shutter starts to open at a time point A and is opened completely at B while it starts to close at C and is closed completely at D. The period during which the flash lamp is emitting light is so controlled as to fall within the time interval BC during which the shutter is opened completely. The quantity of light emitted by the flash lamp corresponds to the area enclosed by the curve (1) and the abscissa. Assuming that the quantity of emitted light detected by the sensor 46 coincides with the quantity of light emission set for given film sensitivity, contraction ratio for

- 11 -

projection and effective lens aperture at a time point E,
the light emission by the flash lamp is stopped at this
time point. In this way, the film is exposed to the
requisite quantity of light even when the quantity of
light emitted by the lamp varies or undergoes degradation
in the course of time lapse.

In the case of the automatic strobe for the
conventional photographic cameras, control is performed in
such a manner in which an object to be photographed is
illuminated with light emitted by a strobe lamp, wherein
light reflected by the object is received for controlling
the stopping of light emission by the strobe lamp. In the
case of preparing the diapositive for projection from an
original, it is desirable that the blank portion of the
original has uniform whiteness. Further, when the control
is performed on the basis of the reflected light from the
original, the quantity of light detected by the sensor will
undergo variation in dependence on the image density even
for a same reflection ratio of the blank portion. Accordingly,
it is preferred that the standard reflection plate be provided
as taught by the present invention.

The position at which the standard reflection
plate is mounted is not restricted to the position shown
in Fig. 6. The standard white plate may be mounted on the

- 12 -

upper surface of the contact glass plate 5 as shown in Fig. 7(a) or mounted below the contact glass plate 5 in an·inclined orientation as shown in Fig. 7(b), being understood that other various mounting manners may be adopted.

Further, by mounting the sensor 46 at a region of a film surface 4! where the image is to be formed so that light reflected by the standard reflection plate 45 may impinge on the sensor 46 through the optical system for exposure, decreasing in the quantity of light due to contamination of the mirrors and lenses of the optical system can be automatically compensated for, whereby image can be transferred with much stabilized density.

When the film sensitivity is low or when the flash lamp is deteriorated, it may occur that the quantity of light is insufficient even when the voltage applied to the lamp is set at maximum. More specifically, it may happen that the quantity of light represented by the area enclosed by the curve ① and the abscissa as shown in Fig. 9 can not attain the quantity of light for exposure set in accordance with the film sensitivity, effective lens aperture and the contraction ratio for projection.

In that case, the flash lamp may be repeatedly fired twice or more until the requisite quantity of light has been attained. Since positional relationship among the original, the optical system for exposure and the film is invariable in this image forming apparatus, there arises no fears that image should undergo deviation even when the exposure is performed twice or a number of times.

"In the case of the illustrative embodiment shown in Figs. 6 to 8, detection of the quantity of light emitted by the flash lamp is carried out indirectly by detecting the quantity of light reflected by the standard reflecting plate 45 by means of the sensor 46. However, it is also possible to dispose the sensor 46 within a range illuminated by the flash lamp 22 and outside of the range of light rays reaching the range A of the contact glass plate 5 in which the original is supported, so that the quantity of light emitted by the flash lamp 22 can be directly sensed.

With such arrangement, the standard reflecting plate can be omitted, while error of measurement due to contamination and discoloration of the standard reflecting plate in the course of time lapse can be avoided."

INDUSTRIAL APPLICABILITY

As will be appreciated from the foregoing description, the corrected exposure can be automatically accomplished for various film sensitivities, contraction ratios and

- 14 -

effective lens aperture values according to the present invention.

CLAIM:

An image forming apparatus including a glass plate on which an original is disposed, a flash lamp for illuminating the original disposed on said glass plate, and an illuminating optical system for focusing light reflected from the original illuminated with said flash lamp onto a light sensitive material mounted on said apparatus at a predetermined position for exposure thereof, characterized in that when the quantity of light emitted by said flash lamp through a single firing thereof is insufficient for an appropriate exposure of said light sensitive material, said flash lamp is fired a plurality of times for assuring said appropriate exposure.

- 16 -

# INTERNATIONAL SEARCH REPORT

0253897

International Application No  PCT/JP87/00019

## I. CLASSIFICATION OF SUBJECT MATTER (if several classification symbols apply, indicate all)

According to International Patent Classification (IPC) or to both National Classification and IPC

Int.Cl$^4$   G03B27/72

## II. FIELDS SEARCHED

### Minimum Documentation Searched

| Classification System | Classification Symbols |
|---|---|
| IPC | G03B27/72 |

### Documentation Searched other than Minimum Documentation to the Extent that such Documents are included in the Fields Searched

Jitsuyo Shinan Koho          1923 – 1986
Kokai Jitsuyo Shinan Koho    1971 – 1986

## III. DOCUMENTS CONSIDERED TO BE RELEVANT

| Category* | Citation of Document, with indication, where appropriate, of the relevant passages | Relevant to Claim No |
|---|---|---|
| X | US, A, 4255046 (Xerox Corp) 10 March 1981 (10. 03. 81) (Family: none) | 1 |
| Y | JP, A, 48-43631 (Matsushita Electric Ind. Co., Ltd.) 23 June 1973 (23. 06. 73) (Family: none) | 1 |
| Y | JP, B, 45-5338 (Citizen Watch Co., Ltd.) 23 February 1970 (23. 02. 70) (Family: none) | 1 |

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search | Date of Mailing of this International Search Report |
|---|---|
| March 30, 1987 (30. 03. 87) | April 13, 1987 (13. 04. 87) |

| International Searching Authority | Signature of Authorized Officer |
|---|---|
| Japanese Patent Office | |

Form PCT/ISA/210 (second sheet) (October 1981)